# EUROPÄISCHE PATENTSCHRIFT

(11) **EP 2 580 087 B1**
(45) Veröffentlichungstag und Bekanntmachung des Hinweises auf die Patenterteilung: **21.01.2015**
(21) Anmeldenummer: 11725408.6
(22) Anmeldetag: 06.06.2011
(51) Int. Cl.: B60N 2/24, B60N 2/42, B63B 29/04, B64D 11/06, B60N 2/50

(54) **IN EINEM MONTAGERAHMEN AUFGEHÄNGTER SICHERHEITSSITZ FÜR LAND-, LUFT- UND SEEFAHRZEUGE**
SAFETY SEAT FOR LAND, AIR AND SEA VEHICLES SUSPENDED IN A MOUNTING FRAME
SIÈGE DE SÉCURITÉ POUR VÉHICULES TERRESTRES, AÉRIENS ET MARITIMES, SUSPENDU DANS UN CADRE DE MONTAGE

(30) Priorität: 08.06.2010 DE 102010023065
(43) Veröffentlichungstag der Anmeldung: 17.04.2013
(73) Patentinhaber: AUTOFLUG GMBH, 25462 Rellingen (DE)
(72) Erfinder: MAEVERT, Mario, 31688 Nienstaedt (DE)
(74) Vertreter: Müller, Karl-Ernst
(86) Internationale Anmeldenummer: PCT/EP2011/059255
(87) Internationale Veröffentlichungsnummer: WO 2011/154340

(56) Entgegenhaltungen:
- EP-A1- 2 135 770
- DE-B3-102007 019 348
- DE-B3-102008 005 422

## Beschreibung

Die Erfindung betrifft einen Sicherheitssitz für Land-, Luft- und Seefahrzeuge mit einem einen Sitzteil bildenden Sitzteilrahmen und mit einem damit verbundenen, eine Rückenlehne ausbildenden Rückenlehnenrahmen, wobei der Rückenlehnenrahmen an wenigstens einem an einer vertikal oberhalb des Sicherheitssitzes angeordneten fahrzeugfesten Verankerung befestigten Fanggurt aufgehängt ist und wobei zusätzlich wenigstens ein zwischen in einem vertikalen Abstand zueinander angeordneten fahrzeugfesten Verankerungen aufgespannter Haltegurt derart angeordnet ist, dass der Haltegurt über wenigstens eine am Rückenlehnenrahmen ausgebildete Querstrebe im Wechsel auf deren dem Sitzteil zugewandten Vorderseite und deren dem Sitzteil abgewandten Rückseite geführt ist und dadurch besagte Querstrebe zwischen den Haltgurtabschnitten eingeklemmt ist.

Ein Sicherheitssitz mit den vorgenannten Merkmalen ist in der DE 10 2008 005 422 B3 beschrieben. Der darin erläuterte Sicherheitssitz ist mit seinem Rückenlehnenrahmen bereits an zwei vertikal zwischen am Fahrzeugdach und am Fahrzeugboden befindlichen fahrzeugfesten Verankerungen aufgespannten, schlingenartig ausgebildeten Haltegurten festgelegt, indem der dem Sicherheitssitz zugewandte Vordergurt und der mit Abstand dazu entsprechend verlaufende Hintergurt der Haltegurtschlinge jeweils im Wechsel über die obere Querstrebe sowie die untere Querstrebe des Rückenlehnenrahmens geführt sind derart, dass Vordergurt und Hintergurt bei gespannter Gurtschlinge die Querstreben zwischen sich einklemmen. Zusätzlich ist der Rückenlehnenrahmen an einem an einer vertikal oberhalb des Sicherheitssitzes angeordneten fahrzeugfesten Verankerung befestigten Fanggurt aufgehängt. Dabei reichen die mittels der Beklemmung der Querstreben des Rückenlehnenrahmens durch die Haltegurte aufgebrachten Haltekräfte im Grundsatz bereits aus, den Sicherheitssitz ohne weitere Einbauten an den vertikalen Haltegurten festzulegen. Damit ist in vorteilhafter Weise sichergestellt, dass in der Vertikalrichtung, also in der "z"-Richtung eines Fahrzeuges, einwirkende, beispielsweise durch Minenansprengungen verursachte Stöße von den Haltegurtschlingen wie auch von dem Fanggurt aufgenommen werden. Insgesamt wirkt sich eine Erhöhung der auf den Sicherheitssitz einwirkenden vertikalen Kräfte daher nur in einer sehr geringen vertikalen Lageveränderung des Sicherheitssitzes aus, wobei eine Dämpfung der einwirkenden vertikalen Kräfte durch die Dehnungseigenschaften der eingesetzten Gurte gegeben ist.

Mit dem bekannten Sicherheitssitz beziehungsweise dessen Einbau in ein Fahrzeug ist noch der Nachteil verbunden, dass die einzelnen, jedem Sicherheitssitz zugeordneten Haltegurte und Fanggurte aufwendig zu installieren beziehungsweise aus dem Fahrzeug auszubauen sind, wenn das Fahrzeug einer anderen Nutzung zugeführt werden soll.

Der Erfindung liegt daher die Aufgabe zugrunde, einen Sicherheitssitz der eingangs genannten Art zur Verfügung zu stellen, der in einfacher Weise und damit schnell in ein Fahrzeug einbaubar und daraus zu demontieren ist. Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass zur Festlegung von Fanggurt und Haltegurt ein gesonderter Montagerahmen vorgesehen und in dem Fahrzeug befestigbar ist, wobei an den einander gegenüberliegenden Querträgern des Montagerahmens Durchführungsösen und Befestigungsösen zum Aufspannen von Fanggurt und Haltegurt ausgebildet sind, und der Rückenlehnenrahmen zusätzlich zu seinen außenliegenden Querstreben mit einer dazwischen angeordneten mittleren Querstrebe versehen ist, und dass der einteilig ausgebildete Haltegurt mit seinen beiden Enden an zwei jeweils außenliegenden, an dem oberen Querträger des Montagerahmens befestigten Befestigungsösen festgelegt und durch drei an dem bodenseitigen unteren Querträger des Montagerahmens und zwei an dem oberen Querträger des Montagerahmens angeordnete Durchführungsösen geschlauft und dazwischen hin- und hergeführt ist und dadurch sechs zwischen dem oberen und dem unteren Querträger des Montagerahmens verlaufende Haltegurtabschnitte ausbildet, wobei wenigstens ein Teil der Haltegurtabschnitte im Wechsel über die Vorderseite und die Rückseite der an dem Rückenlehnenrahmen ausgebildeten drei Querstreben geführt ist und eine entsprechende Klemmwirkung ausübt.

Mit der Erfindung ist zunächst der Vorteil verbunden, dass aufgrund der Anordnung der Halte- und Fanggurte an einem Montagerahmen lediglich dieser Montagerahmen in das Fahrzeug eingebaut beziehungsweise daraus ausgebaut zu werden braucht, wobei der Montagerahmen in Abmessung und Ausbildung auf die zur Verfügung stehenden Platzverhältnisse in einem Fahrzeug abgestimmt sein kann. Dabei kann beispielsweise für jeden Sitz ein einzelner, kleiner Montagerahmen vorgesehen sein, Es ist jedoch auch von dem Erfindungsgedanken umfasst, einen größer ausgelegten Montagerahmen zur Verfügung zu stellen, in welchem dann mehrere Sicherheitssitze angeordnet und von den zugeordneten Haltegurten beklemmt sind.

Weiterhin wird die Klemmwirkung des Haltegurtes dadurch erhöht, dass die Rückenlehne zusätzlich zu den außenliegenden Querstreben mit einer dazwischen angeordneten mittleren Querstrebe versehen ist. Schließlich ist auch die Gurtanordnung in erfindungsgemäßer Weise dadurch vereinfacht, dass der Haltegurt einteilig ausgebildet und zwischen an den gegenüberliegenden Querträgern des Montagerahmens entsprechend angebrachten Befestigungsösen und Durchführungsösen hin- und hergeführt ist. Dabei bildet der Haltegurt sechs zwischen dem oberen Querträger und dem unteren Querträger des Montagerahmens jeweils verlaufende Haltegurtabschnitte aus, von denen wenigstens ein Teil zur Ausübung einer entsprechenden Klemmwirkung herangezogen ist.

Gemäß einem ersten Ausführungsbeispiel der Erfindung kann vorgesehen sein, dass die beiden Befestigungsösen und die beiden Durchführungsösen an dem oberen Querträger des Montagerahmens sowie die beiden äußeren Durchführungsösen an dem unteren Querträger des Montagerahmens jeweils in einer Flucht senkrecht zum Rückenlehnenrahmen angeordnet sind und die dritte Durchführungsöse des unteren Querträgers des Montagerahmens mittig dazwischen angeordnet ist derart, dass die beiden jeweils außen liegenden Haltegurtabschnitte einen parallelen Verlauf und die beiden mittleren Haltegurtabschnitte einen V-förmigen Verlauf aufweisen.

Alternativ kann vorgesehen sein, dass die beiden an dem oberen Querträger des Montagerahmens befindlichen Durchführungsösen zwischen den außen liegenden Befestigungsösen und die am unteren Querträger des Montagerahmens befindlichen drei Durchführungsösen jeweils versetzt zueinander angeordnet sind, so dass die sechs Haltegurtabschnitte jeweils einen schiefwinkligen Verlauf zu den Querträgern des Montagerahmens aufweisen.

Im Hinblick auf die einzuleitende Klemmwirkung kann dabei vorgesehen sein, dass die von den beiden Befestigungsösen ausgehenden sowie die im Verlauf des Haltegurtes von den oberen Durchführungsösen zu den unteren Durchführungsösen verlaufenden Haltegurtabschnitte jeweils im Wechsel über die Vorderseite und die Rückseite der drei Querstreben des Rückenlehnenrahmens geführt sind, wobei die im Verlauf des Haltegurtes von den unteren Durchführungsösen zu den oberen Durchführungsösen verlaufenden Haltegurtabschnitte ohne Erfassung der Querstreben des Rückenlehnenrahmens verlaufen.

Alternativ kann vorgesehen sein, dass wiederum die von beiden Befestigungsösen ausgehenden sowie die im Verlauf des Haltegurtes von den oberen Durchführungsösen zu den unteren Durchführungsösen verlaufenden Haltegurtabschnitte jeweils im Wechsel über die Vorderseite und die Rückseite der drei Querstreben des Rückenlehnenrahmens geführt sind, wobei nun jedoch die im Verlauf des Haltegurtes von den unteren Durchführungsösen zu den oberen Durchführungsösen verlaufenden Haltegurtabschnitte im Wechsel nur über die untere und die mittlere Querstrebe des Rückenlehnenrahmens geführt sind. Hiermit kann die Klemmwirkung der Haltegurtabschnitte bezüglich des Rückenlehnenrahmens weiter verbessert werden.

Schließlich kann im Hinblick auf eine maximale Klemmwirkung alternativ vorgesehen sein, dass sämtliche sechs zwischen dem oberen und dem unteren Querträger des Montagerahmens verlaufenden Haltegurtabschnitte im Wechsel über die Vorder- und die Rückseite der drei Querstreben des Rückenlehnenrahmens geführt sind.

Nach einem Ausführungsbeispiel der Erfindung ist vorgesehen, dass die Befestigungsöse für den Fanggurt mittig an dem oberen Querträger des Montagerahmens angeordnet und der Fanggurt an der oberen Querstrebe des Rückenlehnenrahmens angeschlagen ist. Alternativ kann vorgesehen sein, dass der Fanggurt an der mittleren Querstrebe des Rückenlehnenrahmens befestigt ist, wobei als zusätzliche Maßnahme vorgesehen sein kann, dass der Fanggurt zusätzlich die obere Querstrebe des Rückenlehnenrahmens umschlingt.

Dabei kann vorgesehen sein, dass in den Verlauf des Fanggurtes eine Spannvorrichtung eingeschaltet ist, um die Festlegung des Sicherheitssitzes an dem Montagerahmen zu verbessern.

Im Hinblick auf die mehrmalige Hin- und Herführung des einteiligen Haltegurtes zwischen den Durchführungsösen kann nach einem Ausführungsbeispiel der Erfindung vorgesehen sein, dass die an den Querträgern des Montagerahmens angeordneten Durchführungsösen als in das Profil der Querträger jeweils eingebrachte Schlitze ausgebildet sind.

Alternativ kann vorgesehen sein, dass die an den Querträgern des Montagerahmens angeordneten Durchführungsösen als an den Querträgern befestigte Haltebügel ausgebildet sind.

Um ein Spannen des einteiligen Haltegurtes zu ermöglichen, kann vorgesehen sein, dass wenigstens eine der Befestigungsösen als Spannschraube ausgebildet ist; alternativ können auch beide Befestigungsösen in Form von Spannschrauben vorgesehen sein.

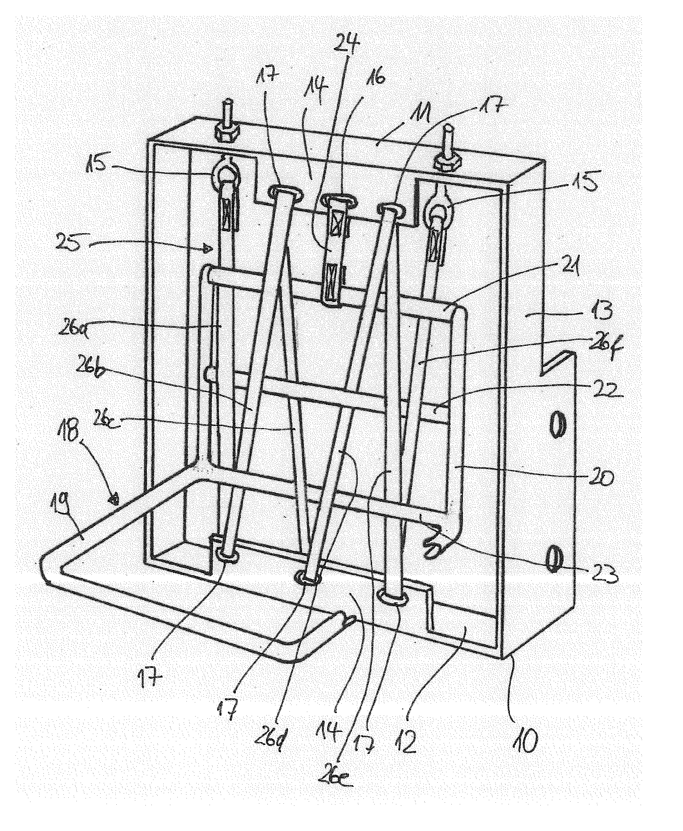

In der Zeichnung ist ein Ausführungsbeispiel der Erfindung wiedergegeben, welches nachstehend beschrieben ist. Die einzige Figur zeigt einen Montagerahmen mit einem darin mittels eines Fanggurtes und eines einteiligen Haltegurtes aufgehängten Sicherheitssitz.

Zur Halterung eines in einer der gattungsbildenden DE 10 2008 005 422 B3 entsprechenden Weise angeordneten Sicherheitssitzes ist ein in einem nicht weiter dargestellten Fahrzeug einzusetzender und darin anzubringender Montagerahmen 10 vorgesehen, der aus einem oberen Querträger 11, einem unteren, dem Fahrzeugboden zugeordneten Querträger 12 und dazwischen verlaufenden Seitenwänden 13 besteht. In diesem Montagerahmen 10 ist bei dem dargestellten Ausführungsbeispiel ein Sicherheitssitz 18 in einer noch zu beschreibenden Weise gehaltert, wobei jedoch auch vorgesehen sein kann, dem Montagerahmen 10 eine derartige Erstreckung zu geben, dass mehrere derartige Sicherheitssitze 18 in dem Montagerahmen 10 angeordnet sein können. Insofern ist mit dem Vorhalten des Montagerahmens 10 für den wenigstens einen Sicherheitssitz 18 der Vorteil verbunden, dass zum Einbau der Sicherheitssitze 18 in ein Fahrzeug lediglich der/die Montagerahmen 10 in das Fahrzeug eingesetzt und darin verankert zu werden brauchen. Soweit der Sicherheitssitz 18 in der aus der gattungsbildenden Schrift bekannten Weise mittels eines Fanggurtes 24 sowie eines Haltegurtes 25 festzulegen ist, sind an dem oberen Querträger 11 und dem unteren Querträger 12 des Montagerahmens 10 jeweils einwärts einspringende Lappen 14 vorgesehen, in denen entsprechende Befestigungs- und Durchführungsösen 16, 17 in Form von in die Lappen 14 eingebrachten Schlitzen ausgebildet sind. Zusätzlich sind an dem oberen Querträger 11 jeweils außenliegende Befestigungsösen 15 in Form von Verschraubungen vorgesehen, wobei wenigstens eine Verschraubung auch als Spannschraube ausgebildet sein kann.

Der in dem Montagerahmen 10 aufgehängte Sicherheitssitz 18 besteht in an sich bekannter Weise aus einem Sitzrahmen 19 und einem Rückenlehnenrahmen 20, der eine obere Querstrebe 21 und eine untere Querstrebe 23 aufweist, wobei die untere Querstrebe 23 auch einen Bestandteil des Sitzrahmens 19 bildet. Zusätzlich ist in dem Rückenlehnenrahmen 20 zwischen der oberen Querstrebe 21 und der unteren Querstrebe 23 noch eine mittlere Querstrebe 22 angeordnet.

Ein solchermaßen ausgestalteter Sicherheitssitz 18 ist zunächst mittels eines die obere Querstrebe 21 des Rückenlehnenrahmens 20 umschlingenden und durch die mittlere obere Befestigungsöse 16 des oberen Querträgers 11 des Montagerahmens 10 hindurchgeführten Fanggurtes 24 aufgehängt. Wie nicht dargestellt kann auch vorgesehen sein, dass der Fanggurt 24 an der mittleren Querstrebe 22 festgelegt ist und in seinem Verlauf zur oberen Befestigungsöse 16 die obere Querstrebe umschlingt. Insbesondere bei einer solchen Ausgestaltung kann vorgesehen sein, dass in den Verlauf des Fanggurtes 24 eine nicht dargestellte Spannvorrichtung eingeschaltet ist.

Zur Festlegung des Sicherheitssitzes 18 und insbesondere von dessen Rückenlehnenrahmen 20 unter Einsatz der Klemmwirkung des Haltegurtes 25 in der grundsätzlich in der DE 10 2008 005 422 B3 beschriebenen Weise ist der Haltegurt 25 einteilig ausgebildet und mehrmalig zwischen den an den Querträgen 11 und 12 des Montagerahmens 10 ausgebildeten Befestigungsösen 15 beziehungsweise Durchführungsösen 17 hin- und hergeführt, sodass sich insgesamt sechs Haltegurtabschnitte 26a bis 26f ergeben. Beginnend an der linken Seite des in der Zeichnung dargestellten Montagerahmens 10 mit Sicherheitssitz 18 ist das eine Ende des Haltesgurtes 25 an der äußeren Befestigungsöse 15 festgelegt, und verläuft von hier aus mit einem ersten Haltegurtabschnitt 26a zu der äußeren, gegenüberliegenden Durchführungsöse 17, wobei der Haltegurtabschnitt 26a im Wechsel an der Rückseite der oberen Querstrebe 21, über die Vorderseite der mittleren Querstrebe 22 und die Rückseite der unteren Querstrebe 23 verläuft; nach Umlenkung in der Durchführungsöse 17 erstreckt sich der Haltegurt 25 mit einem zweiten Haltegurtabschnitt 26b in Richtung einer an dem Lappen 14 des oberen Querträgers 11 ausgebildeten Durchführungsöse 17, wobei der Haltegurtabschnitt 26b lediglich einmal in seinem Verlauf von der Rückseite der unteren Querstrebe 23 zur Vorderseite der mittleren Querstrebe 22 wechselt und von hier aus unmittelbar zur oberen Durchführungsöse 17 verläuft. Nach Umlenkung schließt an die obere Durchführungsöse ein dritter Haltegurtabschnitt 26c an, der in Übereinstimmung mit dem Haltegurtabschnitt 26a im Wechsel zwischen Vorderseite und Rückseite aller drei Querstreben 21, 21, 23 zu einer unteren Durchführungsöse 17 verläuft. Der daran anschließende vierte Haltegurtabschnitt 26d weist einen wiederum im Wechsel alle drei Querstreben erfassenden Verlauf auf, während der nach Umlenkung in der nächstliegenden oberen Durchführungsöse 17 folgende fünfte Haltegurtabschnitt 26e in seinem Verlauf dem Haltegurtabschnitt 26b entspricht, indem der Wechselverlauf nur die mittlere Querstrebe 22 und die untere Querstrebe 23 einbezieht. Der sechste, wiederum außenliegende und mit seinem Ende an der außenliegenden äußeren Befestigungsöse 15 des oberen Querträgers 11 befestigte Haltegurtabschnitt 26f entspricht in seinem Verlauf dem Haltegurtabschnitt 26a und erfasst in seiner Führung über die Vorseite beziehungsweise die Rückseite der Querstreben alle drei Querstreben 21, 22 und 23.

## Patentansprüche

1. Sicherheitssitz (18) für Land-, Luft- und Seefahrzeuge mit einem einen Sitzteil bildenden Sitzrahmen (19) und mit einem damit verbundenen, eine Rückenlehne ausbildenden Rückenlehnenrahmen (20), wobei der Rückenlehnenrahmen (20) an wenigstens einem an einer vertikal oberhalb des Sicherheitssitzes (18) angeordneten fahrzeugfesten Verankerung befestigten Fanggurt (24) aufgehängt ist und wobei zusätzlich wenigstens ein zwischen in einem vertikalen Abstand zueinander angeordneten fahrzeugfesten Verankerungen aufgespannter Haltegurt (25) derart angeordnet ist, dass der Haltegurt (25) über wenigstens eine an dem Rückenlehnenrahmen (20) ausgebildete Querstrebe im Wechsel auf deren dem Sitzteil zugewandter Vorderseite und deren dem Sitzteil abgewandter Rückseite geführt ist und dadurch besagte Querstrebe zwischen den Haltgurtabschnitten eingeklemmt ist, **dadurch gekennzeichnet, dass** zur Festlegung von Fanggurt (24) und Haltegurt (25) ein gesonderter Montagerahmen (10) vorgesehen und in dem Fahrzeug befestigbar ist, wobei an den einander gegenüberliegenden Querträgern (11, 12) des Montagerahmens (10) Durchführungsösen (17) und Befestigungsösen (15, 16) zum Aufspannen von Fanggurt (24) und Haltegurt (25) ausgebildet sind, und der Rückenlehnenrahmen (20) zusätzlich zu seinen außenliegenden Querstreben (21, 23) mit einer dazwischen angeordneten mittleren Querstrebe (22) versehen ist, und dass der einteilig ausgebildete Haltegurt (25) mit seinen beiden Enden an zwei jeweils außenliegenden, an dem oberen Querträger (11) des Montagerahmens (10) befestigten Befestigungsösen (15) festgelegt und durch drei an dem bodenseitigen unteren Querträger (12) des Montagerahmens (10) und zwei an dem oberen Querträger (11) des Montagerahmens (10) angeordnete Durchführungsösen (17) geschlauft und dazwischen hin- und hergeführt ist und dadurch sechs zwischen dem oberen (11) und dem unteren (12) Querträger des Montagerahmens (10) verlaufende Haltegurtabschnitte (26a-f) ausbildet, wobei wenigstens ein Teil der Haltegurtabschnitte (26a-f) im Wechsel über die Vorderseite und die Rückseite der an dem Rückenlehnenrahmen (20) ausgebildeten drei Querstreben (21, 22, 23) geführt ist und eine entsprechende Klemmwirkung ausübt.

2. Sicherheitssitz nach Anspruch 1, **dadurch gekennzeichnet, dass** die beiden Befestigungsösen (15) und die beiden Durchführungsösen (17) an dem oberen Querträger (11) des Montagerahmens (10) sowie die beiden äußeren Durchführungsösen (17) an dem unteren Querträger (12) des Montagerahmens (10) jeweils in einer Flucht senkrecht zum Rückenlehnenrahmen (20) angeordnet sind und die dritte (17) Durchführungsöse des unteren (12) Querträgers des Montagerahmens (10) mittig dazwischen angeordnet ist derart, dass die beiden jeweils außen liegenden Haltegurtabschnitte (26a, 26f) einen parallelen Verlauf und die beiden mittleren Haltegurtabschnitte (26c, 26d) einen V-förmigen Verlauf aufweisen.

3. Sicherheitssitz nach Anspruch 1, **dadurch gekennzeichnet, dass** die beiden an dem oberen Querträger (11) des Montagerahmens (10) befindlichen Durchführungsösen (17) zwischen den außen liegenden Befestigungsösen (15) und die am unteren Querträger (12) des Montagerahmens (10) befindlichen drei Durchführungsösen (17) jeweils versetzt zueinander angeordnet sind, so dass die sechs Haltegurtabschnitte (26a-f) jeweils einen schiefwinkligen Verlauf zu den Querträgern (11, 12) des Montagerahmens (10) aufweisen.

4. Sicherheitssitz nach Anspruch 2 oder 3, **dadurch gekennzeichnet, dass** die von den beiden Befestigungsösen (15) ausgehenden sowie die im Verlauf des Haltegurtes (25) von den oberen Durchführungsösen (17) zu den unteren Durchführungsösen (17) verlaufenden Haltegurtabschnitte (26a, 26f) jeweils im Wechsel über die Vorderseite und die Rückseite der drei Querstreben (21, 22, 23) des Rückenlehnenrahmens (20) geführt sind, wobei die im Verlauf des Haltegurtes (25) von den unteren Durchführungsösen (17) zu den oberen Durchführungsösen (17) verlaufenden Haltegurtabschnitte (26b, 26d) ohne Erfassung der Querstreben des Rückenlehnenrahmens verlaufen.

5. Sicherheitssitz nach Anspruch 2 oder 3, **dadurch gekennzeichnet, dass** die von beiden Befestigungsösen (15) ausgehenden sowie die im Verlauf des Haltegurtes (25) von den oberen Durchführungsösen (17) zu den unteren Durchführungsösen (17) verlaufenden Haltegurtabschnitte (26a, 26f) jeweils im Wechsel über die Vorderseite und die Rückseite der drei Querstreben (21, 22, 23) des Rückenlehnenrahmens (20) geführt sind, wobei die im Verlauf des Haltegurtes (25) von den unteren Durchführungsösen (17) zu den oberen Durchführungsösen (17) verlaufenden Haltegurtabschnitte (26b, 26d) im Wechsel nur über die untere (23) und die mittlere (22) Querstrebe des Rückenlehnenrahmens (20) geführt sind.

6. Sicherheitssitz nach Anspruch 2 oder 3, **dadurch gekennzeichnet, dass** sämtliche sechs zwischen dem oberen (11) und dem unteren (12) Querträger des Montagerahmens (10) verlaufenden Haltegurtabschnitte (26a-f) im Wechsel über die Vorder- und die Rückseite der drei Querstreben (21, 22, 23) des Rückenlehnenrahmens (20) geführt sind.

7. Sicherheitssitz nach einem der Ansprüche 1 bis 6, **dadurch gekennzeichnet, dass** die Befestigungsöse (16) für den Fanggurt (24) mittig an dem oberen Querträger (11) des Montagerahmens (10) angeordnet und der Fanggurt (24) an der oberen Querstrebe (21) des Rückenlehnenrahmens (20) angeschlagen ist.

8. Sicherheitssitz nach einem der Ansprüche 1 bis 6, **dadurch gekennzeichnet, dass** die Befestigungsöse (16) für den Fanggurt (24) mittig an dem oberen Querträger (11) des Montagerahmens (10) angeordnet und der Fanggurt (24) an der mittleren Querstrebe (22) des Rückenlehnenrahmens (20) angeschlagen ist.

9. Sicherheitssitz nach Anspruch 8, **dadurch gekennzeichnet, dass** der Fanggurt (24) zusätzlich die obere Querstrebe (21) des Rückenlehnenrahmens (20) umschlingt.

10. Sicherheitssitz nach einem der Ansprüche 7 bis 9, **dadurch gekennzeichnet, dass** in den Verlauf des Fanggurtes (24) eine Spannvorrichtung eingeschaltet ist.

11. Sicherheitssitz nach einem der Ansprüche 1 bis 10, **dadurch gekennzeichnet, dass** die an den Querträgern (11, 12) des Montagerahmens (10) angeordneten Durchführungsösen (17) als in das Profil der Querträger (11, 12) eingebrachte Schlitze ausgebildet sind.

12. Sicherheitssitz nach einem der Ansprüche 1 bis 8, **dadurch gekennzeichnet, dass** die an den Querträgern (11, 12) des Montagerahmens (10) angeordneten Durchführungsösen (17) als an den Querträgern (11, 12) befestigte Haltebügel ausgebildet sind.

13. Sicherheitssitz nach einem der Ansprüche 1 bis 12, **dadurch gekennzeichnet, dass** wenigstens eine der Befestigungsösen (15) als Spannschraube ausgebildet ist.

14. Sicherheitssitz nach einem der Ansprüche 1 bis 13, **dadurch gekennzeichnet, dass** in einem durchgehenden Montagerahmen (10) eine Mehrzahl von nebeneinander angeordneten Sicherheitssitzen (18) gehaltert ist.

## Claims

1. Safety seat (18) for land vehicles, aircraft and watercraft, with a seat frame (19) that forms a seat part, and with a backrest frame (20) that forms the backrest and is connected to the seat frame (19), whereby the backrest frame (20) is suspended on at least one restraint strap (24) that is secured to an anchor that is mounted in the vehicle and is disposed vertically above the safety seat (18), and whereby additionally at least one holding strap (25), which is stretched between anchors mounted in the vehicle and vertically spaced from one another, is arranged in such a way that the holding strap (25) is guided over at least one transverse or lateral strut formed on the backrest frame (20) alternatingly over its front side that faces the seat part and its back side that faces away from the seat part, thereby clamping said transverse strut in between the holding strap sections, **characterized in that** for the fixing of restraint strap (24) and holding strap (25) in position, a separate mounting frame (10) is provided and can be mounted in the vehicle, whereby bushing or guide-through eyes (17) and attachment eyes (15, 16) are formed on the oppositely disposed transverse or lateral support members (11, 12) of the mounting frame (10) for the stretching of restraint strap (24) and holding strap (25), and the backrest frame (20), in addition to its outwardly disposed transverse struts (21, 23), is provided with a central transverse strut (22) disposed therebetween, and **in that** the one-piece holding strap (25) is fixed by its two ends on two respectively outwardly disposed attachment eyes (15) secured to the upper lateral support (11) of the mounting frame (10) and is looped through, and guided back and forth between, three bushing eyes (17) disposed on the floor side, lower lateral support (12) of the mounting frame (10), and two bushing eyes (17) disposed on the upper lateral support (11) of the mounting frame (10), to thereby form six holding strap sections that run between the upper (11) and the lower (12) lateral supports of the mounting frame (10), whereby at least some of the holding strap sections (26a-f) are alternatingly guided over the front side and the rear side of the three transverse struts (21, 22, 23) formed on the backrest frame (20) to apply an appropriate clamping effect.

2. Safety seat according to claim 1, **characterized in that** the two attachment eyes (15) and the two bushing eyes (17) on the upper lateral support (11) of the mounting frame (10), as well as the two outer bushing eyes (17) on the lower lateral support (12) of the mounting frame (10), are respectively arranged in an alignment perpendicular to the backrest frame (20), and the third (17) bushing eye of the lower (12) lateral support of the mounting frame (10) is disposed centrally therebetween, in such a way that the two respectively outwardly disposed holding strap sections (26a, 26f) extend parallel to one another, and the two central holding strap sections (26c, 26d) produce a V-shaped path.

3. Safety seat according to claim 1, **characterized in that** the two bushing eyes (17) disposed on the upper lateral support (11) on the mounting frame (10) between the outwardly disposed attachment eyes (15), and the three bushing eyes (17) disposed on the lower lateral support (12) of the mounting frame (10), are respectively disposed offset relative to one another, so that the six holding strap sections (26a, f) respectively have an oblique-angled path relative to the lateral supports (11, 12) of the mounting frame (10).

4. Safety seat according to claim 2 or 3, **characterized in that** the holding strap sections (26a, 26f) that proceed from the two attachment eyes (15), as well as those that in the progress of the holding strap (25) extend from the upper bushing eyes (17) to the lower bushing eyes (17), are respectively alternatingly guided over the front side and the rear side of the three transverse struts (21, 22, 23) of the backrest (20), whereby the holding strap sections (26b, 26d) that in the progress of the holding strap (25) extend from the lower bushing eyes (17) to the upper bushing eyes (17) extend without engaging the transverse struts of the backrest frame.

5. Safety seat according to claim 2 or 3, **characterized in that** the holding strap sections (26a, 26f) that proceed from the two attachment eyes (15), as well as those that in the progress of the holding strap (25) extend from the upper bushing eyes (17) to the lower bushing eyes (17), are respectively alternatingly guided over the front side and the rear side of the three transverse struts (21, 22, 23) of the backrest frame (20), whereby the holding strap sections (26b, 26d) that in the progress of the holding strap (25) extend from the lower bushing eyes (17) to the upper bushing eyes (17) are alternatingly guided over only the lower (23) and the central (22) transverse struts of the backrest frame (20).

6. Safety seat according to claim 2 or 3, **characterized in that** all six of the holding strap sections (26a-f) that extend between the upper (11) and the lower (12) lateral supports of the mounting frame (10) are alternatingly guided over the front and rear sides of the three transverse struts (21, 22, 23) of the backrest frame (20).

7. Safety seat according to claims 1 to 6, **characterized in that** the attachment eye (16) for the restraint strap (24) is centrally disposed on the upper lateral support (11) of the mounting frame (10), and the restraint strap (24) is attached to the upper transverse strut (21) of the backrest frame (20).

8. Safety seat according to claims 1 to 6, **characterized in that** the attachment eye (16) for the restraint strap (24) is centrally disposed on the upper lateral support (11) of the mounting frame (10), and the restraint strap (24) is attached to the central transverse strut (22) of the backrest frame (20).

9. Safety seat according to claim 8, **characterized in that** the restraint strap (24) additionally is looped around the upper transverse strut (21) of the backrest frame (20).

10. Safety seat according to one of the claims 7 to 9, **characterized in that** in the path of the restraint strap (24) a tension device is disposed.

11. Safety seat according to one of the claims 1 to 10, **characterized in that** the bushing eyes (17) disposed on the lateral supports (11, 12) of the mounting frame (10) are formed as slots introduced into the profile of the lateral supports (11, 12).

12. Safety seat according to one of the claims 1 to 8, **characterized in that** the bushing eyes (17) disposed on the lateral supports (11, 12) of the mounting support (10) are embodied as retaining clips or loops secured to the lateral supports (11, 12).

13. Safety seat according to one of the claims 1 to 12, **characterized in that** at least one of the attachment eyes (15) is embodied as a tensioning screw or turnbuckle.

14. Safety seat according to one of the claims 1 to 13, **characterized in that** a plurality of safety seats (18) disposed next to one another are supported in a continuous mounting frame (10).

## Revendications

1. Siège de sécurité (18) pour véhicules terrestres, aériens et maritimes avec un cadre de siège (19) formant une partie de siège et avec un cadre de dossier (20) réalisant un dossier, relié à celui-ci, le cadre de dossier (20) étant suspendu sur au moins une sangle d'arrêt (24) fixée sur un ancrage fixé au véhicule, agencé verticalement au-dessus du siège de sécurité (18) et en outre au moins une sangle de retenue (25) serrée entre des ancrages fixés au véhicule, agencés à une distance verticale entre eux étant agencée de telle manière que la sangle de retenue (25) soit guidée sur au moins une entretoise réalisée sur le cadre de dossier (20) en alternance sur son côté avant tourné vers la partie de siège et son côté arrière éloigné de la partie de siège et par là-même ladite entretoise soit coincée entre les sections de sangle de retenue, **caractérisé en ce qu'**un cadre de montage (10) séparé est prévu pour la fixation de la sangle d'arrêt (24) et de la sangle de retenue (25) et peut être fixé dans le véhicule, des sillets de passage (17) et des oeillets de fixation (15, 16) étant réalisés pour le serrage de la sangle d'arrêt (24) et de la sangle de retenue (25) sur les traverses (11, 12) en regard du cadre de montage (10), et le cadre de dossier (20) étant pourvu, outre de ses entretoises (21, 23) extérieures, d'une entretoise (22) médiane agencée entre celles-ci, et **en ce que** la sangle de retenue (25) réalisée d'un seul tenant est fixée avec ses deux extrémités sur deux oeillets de fixation (15) extérieurs respectivement, fixés sur la traverse supérieure (11) du cadre de montage (10) et est enroulée par trois oeillets de passage (17) agencés sur la traverse inférieure (12) du cadre de montage (10) et deux oeillets de passage (17) agencés sur la traverse supérieure (11) du cadre de montage (10) et guidée alternativement entre ceux-ci et par là-même réalise six sections de sangle de retenue (26a-f) s'étendant entre la traverse supérieure (11) et la traverse inférieure (12) du cadre de montage (10), au moins une partie des sections de sangle de retenue (26a-f) étant guidée alternativement sur le côté avant et le côté arrière des trois entretoises (21, 22, 23) réalisées sur le cadre de dossier (20) et exerçant une action de serrage correspondante.

2. Siège de sécurité selon la revendication 1, **caractérisé en ce que** les deux oeillets de fixation (15) et les deux oeillets de passage (17) sont agencés sur la traverse (11) supérieure du cadre de montage (10) ainsi que les deux oeillets de passage (17) extérieurs sur la traverse inférieure (12) du cadre de montage (10) respectivement dans un alignement perpendiculairement au cadre de dossier (20) et le troisième (17) oeillet de passage de la traverse (12) inférieure du cadre de montage (10) est agencé au milieu entre ceux-ci de telle manière que les deux sections de sangle de retenue (26a, 26f) extérieures respectivement présentent une allure parallèle et les deux sections de sangle de retenue médianes (26c, 26d) présentent une allure en V.

3. Siège de sécurité selon la revendication 1, **caractérisé en ce que** les deux oeillets de passage (17) se trouvant sur la traverse supérieure (11) du cadre de montage (10) sont agencés entre les oeillets de fixation extérieurs (15) et les trois oeillets de passage (17) se trouvant sur la traverse inférieure (12) du cadre de montage (10) en déport respectivement les uns par rapport aux autres de sorte que les six sections de sangle de retenue (26a-f) présentent respectivement une allure oblique par rapport aux traverses (11, 12) du cadre de montage (10).

4. Siège de sécurité selon la revendication 2 ou 3, **caractérisé en ce que** les sections de sangle de retenue (26a, 26f) sortant des deux oeillets de fixation (15) ainsi que celles s'étendant dans l'allure de la sangle de retenue (25) des oeillets de passage supérieurs (17) aux oeillets de passage inférieurs (17) sont guidées respectivement alternativement sur le côté avant et le côté arrière des trois entretoises (21, 22, 23) du cadre de dossier (20), les sections de sangle de retenue (26b, 26d) s'étendant dans l'allure de la sangle de retenue (25) des oeillets de passage inférieurs (17) aux oeillets de passage supérieurs (17) sans saisie des entretoises du cadre de dossier.

5. Siège de sécurité selon la revendication 2 ou 3, **caractérisé en ce que** les sections de sangle de retenue (26a, 26f) sortant des deux oeillets de fixation (15) ainsi que celles s'étendant dans l'allure de la sangle de retenue (25) des oeillets de passage supérieurs (17) aux oeillets de passage inférieurs (17) sont guidées respectivement alternativement sur le côté avant et le côté arrière des trois entretoises (21, 22, 23) du cadre de dossier (20), les sections de sangle de retenue (26b, 26d) s'étendant dans l'allure de la sangle de retenue (25) des oeillets de passage inférieurs (17) aux oeillets de passage supérieurs (17) étant guidées alternativement uniquement sur l'entretoise inférieure (23) et l'entretoise médiane (22) du cadre de dossier (20).

6. Siège de sécurité selon la revendication 2 ou 3, **caractérisé en ce que** toutes les six sections de sangle de retenue (26a-f) s'étendant entre la traverse supérieure (11) et la traverse inférieure (12) du cadre de montage (10) sont guidées alternativement sur le côté avant et le côté arrière des trois entretoises (21, 22, 23) du cadre de dossier (20).

7. Siège de sécurité selon l'une quelconque des revendications 1 à 6, **caractérisé en ce que** l'oeillet de fixation (16) pour la sangle d'arrêt (24) est agencé au milieu sur la traverse supérieure (11) du cadre de montage (10) et la sangle d'arrêt (24) est en butée contre l'entretoise supérieure (21) du cadre de dossier (20).

8. Siège de sécurité selon l'une quelconque des revendications 1 à 6, **caractérisé en ce que** l'oeillet de fixation (16) pour la sangle d'arrêt (24) est agencé au milieu sur la traverse supérieure (11) du cadre de montage (10) et la sangle d'arrêt (24) est en butée contre l'entretoise médiane (22) du cadre de dossier (20).

9. Siège de sécurité selon la revendication 8, **caractérisé en ce que** la sangle d'arrêt (24) enroule en outre l'entretoise supérieure (21) du cadre de dossier (20).

10. Siège de sécurité selon l'une quelconque des revendications 7 à 9, **caractérisé en ce qu'**un dispositif de serrage est monté dans l'allure de la sangle d'arrêt (24).

11. Siège de sécurité selon l'une quelconque des revendications 1 à 10, **caractérisé en ce que** les oeillets de passage (17) agencés sur les traverses (11, 12) du cadre de montage (10) sont réalisés comme des fentes introduites dans le profilé des traverses (11,12).

12. Siège de sécurité selon l'une quelconque des revendications 1 à 8, **caractérisé en ce que** les oeillets de passage (17) agencés sur les traverses (11, 12) du cadre de montage (10) sont réalisés comme des étriers de retenue fixés sur les traverses (11, 12).

13. Siège de sécurité selon l'une quelconque des revendications 1 à 12, **caractérisé en ce qu'**au moins un des oeillets de fixation (15) est réalisé comme une vis de serrage.

14. Siège de sécurité selon l'une quelconque des revendications 1 à 13, **caractérisé en ce qu'**une pluralité de sièges de sécurité (18) agencés les uns à côté des autres est fixée dans un cadre de montage continu (10).
